# EUROPEAN PATENT SPECIFICATION

(11) **EP 1 320 978 B1**
(45) Date of publication and mention of the grant of the patent: **19.07.2006**
(21) Application number: 01983919.0
(22) Date of filing: 25.09.2001
(51) Int. Cl.: H04L 29/06

(54) **DEVICE FOR PROTOCOL CONVERSION USING A CANONICAL INTERMEDIATE**
GERÄT ZUR PROTOKOLLÜBERSETZUNG MIT HILFE EINES GENERISCHEN ZWISCHENPROTOKOLLS
INTERFACE DE DISPOSITIF CANONIQUE

(30) Priority: 27.09.2000 US 235820 P; 16.10.2000 US 688777
(43) Date of publication of application: 25.06.2003
(73) Proprietor: STORAGE TECHNOLOGY CORPORATION, Louisville, CO 80028-4309 (US)
(72) Inventor: LEYES, John, M., Bloomington, MN 55420 (US); BAKKE, Mark, A., Maple Grove, MN 55369 (US); KUIK, Timothy, J., Lino Lakes, MN 55014 (US); PETERSON, David A., Rogers, MN 55374 (US); HADDERS, Dennis, L., Maple Grove, MN 55369 (US)
(74) Representative: W.P. Thompson & Co.
(86) International application number: PCT/US2001/030041
(87) International publication number: WO 2002/027507

(56) References cited:
- EP-A- 0 981 234
- WO-A-99/07116
- US-A- 5 712 903
- SHU J C ET AL: "AN APPROACH TO INDIRECT PROTOCOL CONVERSION *" COMPUTER NETWORKS AND ISDN SYSTEMS, NORTH HOLLAND PUBLISHING. AMSTERDAM, NL, vol. 21, no. 2, 1 April 1991 (1991-04-01), pages 93-108, XP000172494 ISSN: 0169-7552

## Description

### TECHNICAL FIELD

The present invention relates to interfacing computer elements that converse using different protocols.

### BACKGROUND ART

Typically, a computer system or network includes many computer elements of differing types. Computer element types include various processing elements such as host computers and I/O processors; communication interfaces to other computer systems including those connected through the Internet, wide area networks, telecommunication systems, local area networks, and the like; storage devices such as tape drives, disk drives, memory banks, tape and disk libraries, optical storage, and the like; support elements such as data presenters, translators, and the like; and system monitoring and debugging hardware. Communication between computer elements must follow a mutually recognized protocol to ensure that any message sent by one computer element is properly received and interpreted by another computer element. The communication protocol establishes a set of rules governing the format of messages exchanged between the computer elements. A protocol may specify a variety of communication characteristics, including communication initiation and termination, signaling, data format, information representation, transmission media, and the like. Many types of protocols exist for intercomputer element communication, including those associated with specifications such as Small Computer System Interface (SCSI), Enterprise Systems Connection (ESCON), Fiber Channel (FC), Intelligent Peripheral Interface (IPI), High Performance Parallel Interface (HIPPI), Internet Protocol (IP), framing protocols, ATM Adaption Layer for computer data (AAL5), Link Encapsulation (FC_LE), Single Byte Command Code Set Mapping (SBCCSM), IEEE 802.x, and the like.

Computer elements may be interconnected in a variety of ways. Computer elements may be directly connected in a point-to-point fashion. Computer elements may also be connected through a network, such as a local area network. Local area networks offer greater flexibility than point-to-point connection, but typically have much lower rates of information transfer. Storage area networks offer much of the same flexibility as traditional local area networks, but with greater rates of information transfer. Typically used to interface host computers and storage devices, storage area networks may also include intelligence to off-load storage tasks from host processors. An example storage area network is described in U.S. Patent Application titled "Information Network Virtual Backplane" carrying attorney docket number 99-002-NSC (STK 99002 PUS), by R. Lane *et al*., which is hereby incorporated by reference in its entirety.

Regardless of how computer elements are interconnected, difficulties arise when a computer element using one type of communication protocol attempts to access a computer element communicating through a second type of protocol. Typically, a protocol translator must be constructed and implemented on one of the computer elements. Such a protocol translator must be designed for each pair of protocols, if computer elements using those protocols are to communicate. Further, specific characteristics of computer elements such as, for example, the operating system, may force additional versions of protocol translators to be designed.

Improved translation between differing communication protocols is needed. Protocol translation should be flexible to permit computer elements of varying types to be easily interconnected.

WO 99/07116 discloses a method and apparatus for processing multi-protocol communications via a single system. This is accomplished by receiving a message from a first communications device wherein the message includes the identity of at least a first communications device and a second communications device. When the first communications device utilizes a different communications protocol than the second communication device, the messages transceived between the two communication devices are converted by an appropriate communication protocol. Such conversion is done by first converting an incoming message having a first communication protocol format into a message having a generic communication protocol format. The message having the generic communication protocol format is then converted into a message having a second communication protocol format, which message is subsequently routed to the second communication device.

EP 0981234 discloses a data connection between two heterogeneous systems which are coupled to an interface computer. The system-specific protocol of the heterogeneous systems is converted with respect to its syntax into a second protocol having the same basic elementary data structure. All system conditions that can be generated or recognised by the specific protocol are represented by classes in the form of graphs. The specific classes are generated upon initialisation of the interface computer and then events are controlled by an event handler and the classes are monitored and realised.

### DISCLOSURE OF INVENTION

The present invention provides for the use of a canonical protocol in communications between translation modules. Each translation module communicates with a computer element using a particular protocol recognized by that computer element Each translation module communicates with one or more other translation modules using a generic or canonical protocol.

According to an aspect of the present invention, there is provided a method for interfacing a first computer element and a second computer element exchanging messages, the first computer element sending and receiving messages using a first data storage protocol, the second computer element sending and receiving messages using a second data storage protocol, one of the first computer element and the second computer element being a data storage device arranged to respond to data storage commands from host computer systems, the method comprising:
translating messages received from the first computer element from the first protocol to a canonical protocol, the canonical protocol including at least one data storage access command;
translating messages sent to the first computer element from the canonical protocol to the first protocol;
translating messages received from the second computer element from the second protocol to the canonical protocol;
translating messages sent to the second computer element from the canonical protocol to the second protocol; and characterised by:
   receiving the messages sent from the first computer element and the second computer element in a storage area network before translation into the canonical protocol; and
   sending the messages received by the first computer element and the second computer element from the storage area network after translation out of the canonical protocol.

Preferably, messages sent to or received from the first computer element are translated in a first interface. Messages sent to or received from the second computer element are translated in a second interface. The first interface and the second interface are separate from the first computer element and the second computer element.

Conveniently, translating a message results in generating, for at least one type of message received, a plurality of messages sent. Alternatively, translating results in generating, for at least one type of message received, a return message to the sender of the received message.

According to another aspect of the present invention, there is provided a system for interfacing a first computer element with a second computer element, one of the first computer element and the second computer element being a data storage device responding to data storage commands from host computer systems, the first computer element operating with a first data storage protocol and the second computer element operating with a second data storage protocol, the system comprising:
a storage area network interconnecting the first computer element and the second computer element; and characterised by:
   a first module disposed within the storage area network, the first module in communication with the first computer element, the first module translating between messages in the first protocol and messages in a canonical protocol, the canonical protocol including at least one data storage access command; and
   a second module disposed within the storage area network, the second module in communication with the second computer element and the first module, the second module translating between messages in the second protocol and messages in the canonical protocol

Preferably the second computer element is a peripheral device. The second module may then function as a server to the first module client.

According to a further aspect of the present invention, there is provided a storage area network interconnecting at least one host computer accessing data using a logical device protocol with at least one storage device allowing access to data through a physical device protocol, each of the logical device protocol and the physical device protocol being a data storage protocol, the storage area network characterised by:
at least one logical device module in communication with each host computer, each logical device module translating between logical device protocol messages and canonical protocol messages, the canonical protocol messages including at least one data storage access command; and
at least one physical device module in communication with each storage device, each physical device module translating between physical device protocol messages and canonical protocol messages.

The above objects and other objects, features, and advantages of the present invention are readily apparent from the following detailed description of the best mode for carrying out the invention when taken In connection with the accompanying drawings.

### BRIEF DESCRIPTION OF DRAWINGS

FIGURE 1 is a block diagram illustrating interfacing computer elements according to an embodiment of the present invention;
FIGURE 2 is a block diagram of a storage area network according to an embodiment of the present invention;
FIGURE 3 is a message flow diagram illustrating canonical connection according to an embodiment of the present invention;
FIGURE 4 is a message flow diagram illustrating canonical disconnection according to an embodiment of the present invention;
FIGURE 5 is a message flow diagram illustrating canonical store-and-forward write according to an embodiment of the present invention;
FIGURE 6 is a message flow diagram illustrating canonical store-and-forward read according to an embodiment of the present invention;
FIGURE 7 is a message flow diagram illustrating canonical streaming write according to an embodiment of the present invention; and
FIGURE 8 is a message flow diagram illustrating canonical streaming read according to an embodiment of the present invention.

### BEST MODE FOR CARRYING OUT THE INVENTION

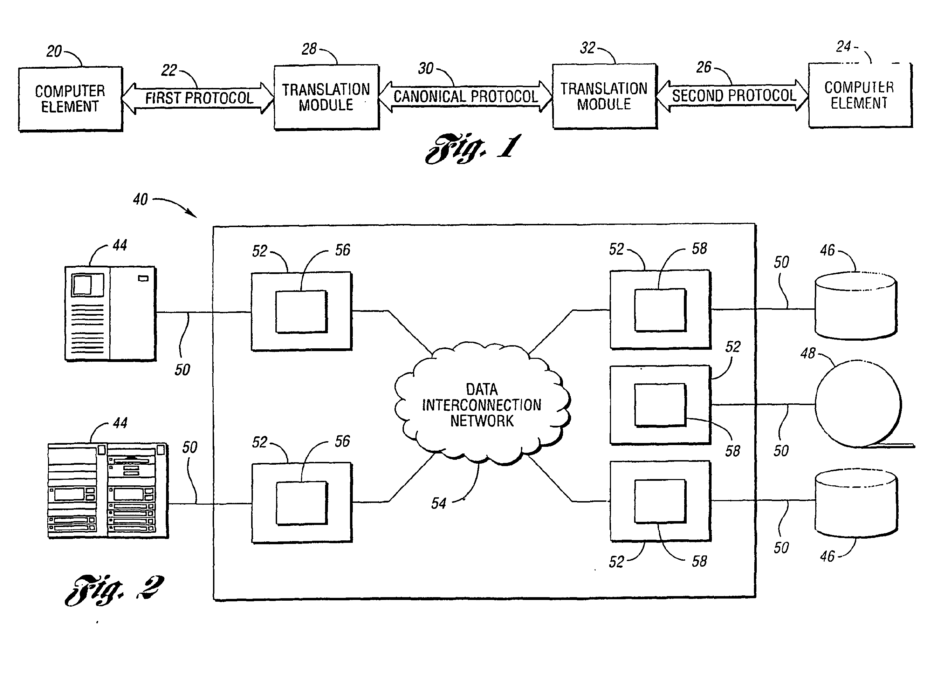

Referring to Figure 1, a block diagram illustrating interfacing computer elements according to an embodiment of the present invention is shown. A first computer element, referenced by 20, communicates through first protocol 22. A second computer element, referenced by 24, communicates through second protocol 26. First translation module 28 translates messages received from first computer element 20 from first protocol 22 into canonical protocol 30. Translation module 28 also translates messages sent to first computer element 20 from canonical protocol 30 to first protocol 22. Second translation module 32 translates messages received from second computer element 24 from second protocol 26 to canonical protocol 30. Translation module 32 also translates messages sent to second computer element 24 from canonical protocol 30 to second protocol 26.

The use of intermediate canonical protocol 30 provides greater flexibility and expandability when communicating between computer elements 20,24. For example, if computer element 20 is replaced with a new computer element 20 having a different first protocol 22, a new translation module 28 is required. However, translation module 32 need not be modified. Also, any additional computer element 20 may also communicate with computer element 24 through a translation module 28 exchanging messages with translation module 32 through canonical protocol 30.

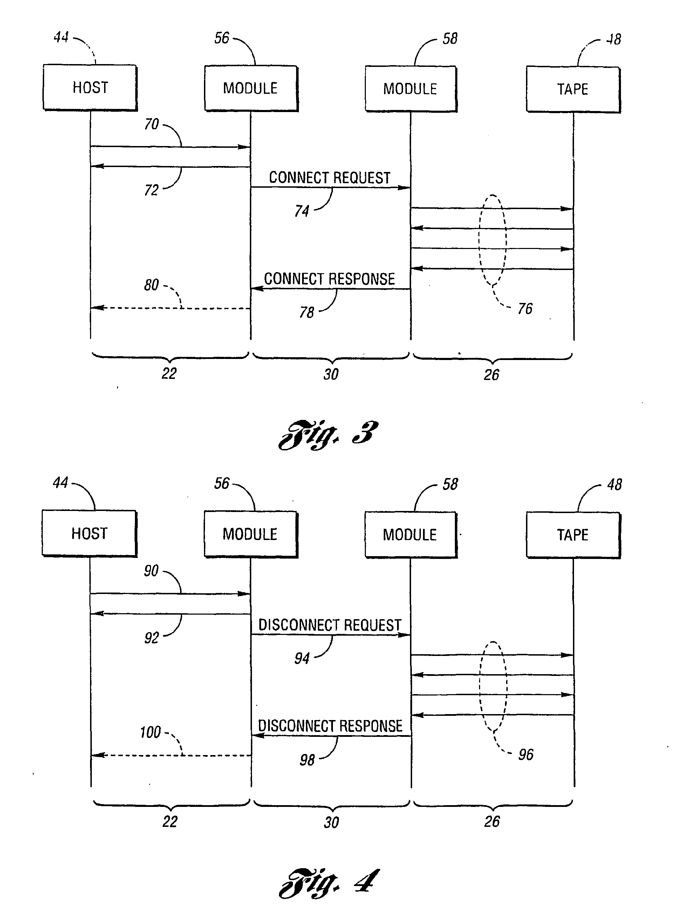

Referring now to Figure 2, a block diagram of a storage area network according to an embodiment of the present invention is shown. A computer system, shown generally by 40, includes storage area network 42 interconnecting a plurality of host computers 44 with storage devices such as disks 46 and tapes 48. Each computer element 44,46,48 is connected to storage area network 42 through one or more links 50. Each link 50 may be formed through any communication medium, such as serial cabling, parallel cabling, optical fiber, radio, infrared, and the like. Each link 50 supports at least one communication protocol, including those protocols associated with standards for fiber channel, Small Computer System Interface (SCSI), Enterprise Systems Connection (ESCON), Fiber Channel (FC), Intelligent Peripheral Interface (IPI), High Performance Parallel Interface (HIPPI), Internet Protocol (IP), framing protocols, ATM Adaption Layer for computer data (AAL5), Link Encapsulation (FC_LE), Single Byte Command Code Set Mapping (SBCCSM), IEEE 802.x, and the like. Each link 50 delivers messages to and receives messages from an associated interface 52 within storage area network 42. The logic for interface 52 may be implemented using one or more microprocessors, custom logic, programmable logic, embedded logic, or the like. Each interface 52 communicates with other interfaces 52 within storage area network 42 through data interconnection network 54. Data interconnection network 54 may be implemented through one or more backplanes, cross-bar switches, ATM switches, fiber channel rings, Ethernet networks, and the like.

Each interface 52 includes one or more translation modules 28,32 to support computer elements 44,46,48 connected to interface 52 through links 50. Logical device module 56 functions as translation module 28, executing on interface 52 to support host computer 44. Physical device module 58 functions as translation module 32, executing on interface 52 to support peripheral devices such as disk 46 or tape 48. Physical device modules 58 function as servers to data access requests received from logical device modules 56 functioning as clients. Typically, logical device module 56 receives a message from host computer 44 in first protocol 22 as part of a data access request. Logical device module 56 converts the message into canonical protocol 30 and forwards the message through data interconnection network 54 to interface 52 capable of servicing the data access request. Physical device module 58 receives the request in canonical protocol 30 and converts the message into second protocol 26 before forwarding the message to storage device 46,48. The process is reversed in the reply from storage device 46,48 to host computer 44.

In addition to translating messages, modules 56,58 localizes control, status, and error messages that may be peculiar to protocol 22,26 or are otherwise not necessary for end-to-end data access communication. For example, host computer 44 may be operating under the assumption that it is connected through link 50 to a SCSI tape drive. Hence, logical device module 56 responds to host computer 44 as if interface 52 executing logical device module 56 was a SCSI tape drive. Hence, logical device module 56 will respond to a control command such as a request for mode sense by generating a dummy status message for host computer 44 without forwarding any canonical message through data interconnection network 54. Likewise, physical device module 58 running on interface 52 connected to ESCON disk drive 46 may generate start-up commands upon initialization without having received any canonical message from data interconnection network 54.

Referring now to Figure 3, a message flow diagram illustrating canonical connection according to an embodiment of the present invention is shown. When host 44 wishes to access data storage, host 44 issues logical connect request 70 in first protocol 22 to logical device module 56. In one embodiment, logical device module 56 may immediately and affirmatively respond to host 44 with logical connect response 72. This permits host 44 to continue as if successful connection with the requested logical peripheral device has been obtained. Logical device module 56 sends canonical connect request 74 to physical device module 58. In addition to establishing a connection between host 44 and tape 48, canonical connect request 74 negotiates the canonical interface features that will be allowed for the connection. For example, translation modules 56,58 may support SCSI features such as random relative offset and overlapping data to permit data to be delivered in any order or transferred more than once, respectively. Canonical connect request 74 may also include a device type, such as disk 46 or tape 48, to prevent host 44 from inadvertently accessing the wrong peripheral type. Canonical connect request 74 may also include an interface version number. If physical device module 58 does not support this version number, module 58 may reject canonical connect request 74. Canonical connect request 74 may also include a request for exclusive or shared use of tape 48.

Upon receiving canonical connect request 74, physical device module 58 first determines if the requested connection is possible. This determination may be based on the specified interface version number, request for resource exclusivity, and the like. If the initial examination is positive, physical device module 58 exchanges one or more connection commands with tape 48, shown as physical connect procedure 76, using second protocol 26. The number and nature of messages exchanged in physical connect procedure 76 depend on second protocol 26 and the physical characteristics of tape 48. Once physical device module 58 establishes a physical connection with tape 48, module 58 forwards canonical connect response 78 to logical device module 56. Canonical connect response 78 includes a connection status indicating whether or not connection was accepted or rejected. If rejected, one or more reject reason codes may be supplied. Canonical connect response 78 may also include a list of supported canonical interface features. Logical device module 56 may send negative logical connect response 80 or, if module 56 has not already done so, affirmative logical connect response 80 to host 44.

Logical connect request 70, logical connect response 72, and logical connect response 80 are illustrated as flowing directly between host 44 and logical device module 56. This type of communication is referred to as in-band signaling because the control information flows along the same communication path as the data. Requests, responses, and other control information may also be exchanged between host 44 and logical device module 56 along a separate path. This type of communication is referred to as out-of-band signaling. As an example, out-of-band signaling is used in tape access systems having a tape library server tracking and controlling tape libraries. Logical mount commands are sent from host 44 to the tape library server. If the mount is successful, the tape library server notifies logical tape module 56. This notification may also provide a mapping between logical tape module 56 and physical device module 58. Some or all of physical connect procedure 76 may also be in-band or out-of-band. The use of an intermediate proxy between hosts 44 and the library server for interpreting out-of-band signaling is described in a U.S. Patent Application titled AVirtual Tape Libraries@ having attorney docket number 99-001-NSC (STK 99001 PUS) by R. Kavuri *et al*., which is hereby incorporated by reference in its entirety.

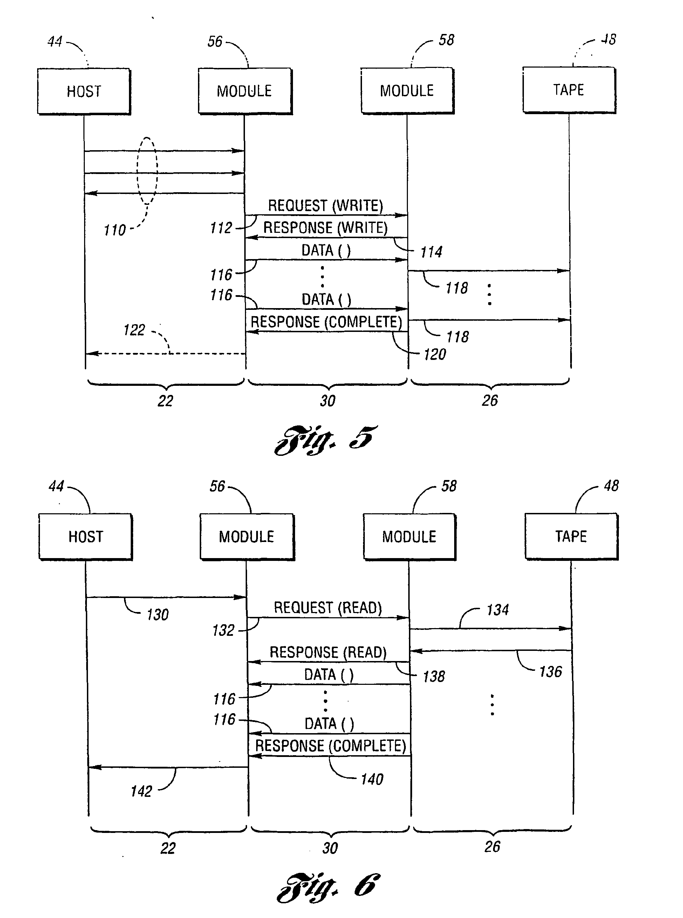

Referring now to Figure 4, a message flow diagram illustrating canonical disconnection according to an embodiment of the present invention is shown. When host 44 is finished with a data access transaction, host 44 sends logical disconnect request 90 in first protocol 22 to logical device module 56. Typically, module 56 responds immediately with logical disconnect response 92 using first protocol 22. Logical device module 56 sends canonical disconnect request 94 to physical device module 58. Canonical disconnect request 94 may include a request sequence number to prevent canonical disconnect request 94 from being received and acted upon by physical device module 58 out of sequence. Physical device module 58 may then exchange one or more messages in second protocol 26 with tape 48, shown by physical disconnect procedure 96, to release tape 48. Once completed, physical device module 58 sends canonical disconnect response 98 to logical device module 56. Canonical disconnect response 98 may include a request sequence number, disconnection status, and one or more reason codes. In unusual situations, logical device module 56 may forward a second logical disconnect response 100 to host 44 using first protocol 22. As with the mount commands, logical disconnect request 90, logical disconnect response 92, physical disconnect procedure 96, and logical disconnect response 100 may be passed through in-band signaling, out-of-band signaling, or a mixture of both.

Referring now to Figure 5, a message flow diagram illustrating canonical store-and-forward write according to an embodiment of the present invention is shown. Host 44 desiring to store data, initiates logical write procedure 110 using first protocol 22 with logical device module 56. The number and type of messages exchanged between host 44 and module 56 depend on a variety of factors including first protocol 22, host 44, the type of storage device 46,48, and storage buffers accessible by module 56. However, since logical device module 56 presents itself to host 44 as a target storage device, once data is transferred from host 44 to module 56 a write acknowledge may be sent by module 56 to host 44. Logical device module 56 operating in store-and-forward mode receives at least a portion of the data from host 44 before sending canonical write request 112 to physical device module 58.

Canonical request messages, such as canonical write request 112, are typically sent from logical device module 56 to physical device module 58 to request performance of an operation. The operations defined are generic for a class of devices. For example, module 56,58 providing an interface for tape drive 48 will typically support operations including read, write, rewind, position, and the like. The canonical request will also provide means to include a device-specific operation description. This could include a SCSI command block, an ESCON CCW, or similar control signals. Each translator module 56,58 can use either the generic or specific operation description to perform the operation, but since the device-specific information is optional translation modules 56,58 must be capable of performing the requested operation without any device-specific information. Each canonical request message will include a command such as, for example, store-and-forward write for canonical write request 112. The canonical request message may also include the length of data, an indication of unknown data length, or an indication of no data depending on the command type. The canonical request message will also include a request sequence numberto ensure that messages are interpreted in the right order regardless of the order transmitted or received. A canonical request message may also include control information associated with the command, format description for device-specific command information, device-specific command information, error correction and detection coding such as a cyclic redundancy code (CRC), completion status, and flags to indicate which fields are valid. Some information, such as length of data, error correction and detection coding, and completion status, will be valid in a canonical request message operating in a store-and-forward mode. When modules 56,58 are operating in a streaming mode, this information may be contained in a canonical end-of-data message.

Optionally, physical device module 58 may respond to canonical write request 112 with canonical write response 114. Response messages, such as canonical write response 114, are used to send a response to the issuer of a canonical request. A canonical response message includes the request sequence number sent with the canonical request. The canonical response message may also include the length of data, an indication that the data length is unknown, or an indication that no data was received. The canonical response message may also include error correction and detection coding, generic status, generic sense information, device-specific status, device-specific sense information, and flags to indicate which fields are valid.

One or more canonical data messages 116 then transfer data between logical device module 56 and physical device module 58. Canonical data message 116 will include the request sequence number of write request 112 as well as a data message sequence number incremented for each canonical data message 116. Canonical data message 116 may also include length of data enclosed, data address such as, for example, offset or random relative offset, error correction and detection coding, and flags indicating which fields are valid as well as indicating end-of-data, data transfer aborted, and the like. Physical device module 58 translates data contained in canonical data messages 116 into a format acceptable by tape 48 and forwards this data using second protocol 26 to tape 48 in one or more physical data messages 118.

Physical device module 58 may forward received data in either streaming mode or store-and-forward mode to fit the requirements of tape drive 48 and second protocol 26. Once physical device module 58 has transmitted all physical data messages 118 successfully, module 58 sends canonical write complete message 120 to logical device module 56. Under certain circumstances, logical device module 56 may forward logical write response 122 to host computer 44 using first protocol 22.

Referring now to Figure 6, a message flow diagram illustrating canonical store-and-forward read according to an embodiment of the present invention is shown. Host computer 44 wishing to read data first sends logical read request 130 to logical device module 56 in first protocol 22. Logical read request 130 may be accompanied by an exchange of messages between host 44 and module 56 as would simulate the exchange between host 44 and an actual peripheral device 46,48 using first protocol 22. Logical device module 56 responds to logical read request 30 by sending canonical read request 132 to physical device module 58. Physical device module 58 forwards physical read request 134 using second protocol 26 to tape 48. Once again, physical read request 134 may be accompanied by an exchange of messages between physical device module 58 and tape 48 necessary to support the read operation. Tape 48 responds with physical read data 136 which is stored in physical device module 58. Physical device module 58 sends canonical read response 138 to logical device module 56 followed by one or more data messages 116. Physical device module 58 finally sends canonical read complete response 140 to logical device module 56. Logical read data 142 from logical device module 56 is sent to host 44 using first protocol 22. Logical read data 142 may be accompanied by the appropriate exchange of control messages between host 44 and a physical storage device of the type simulated by logical device module 56.

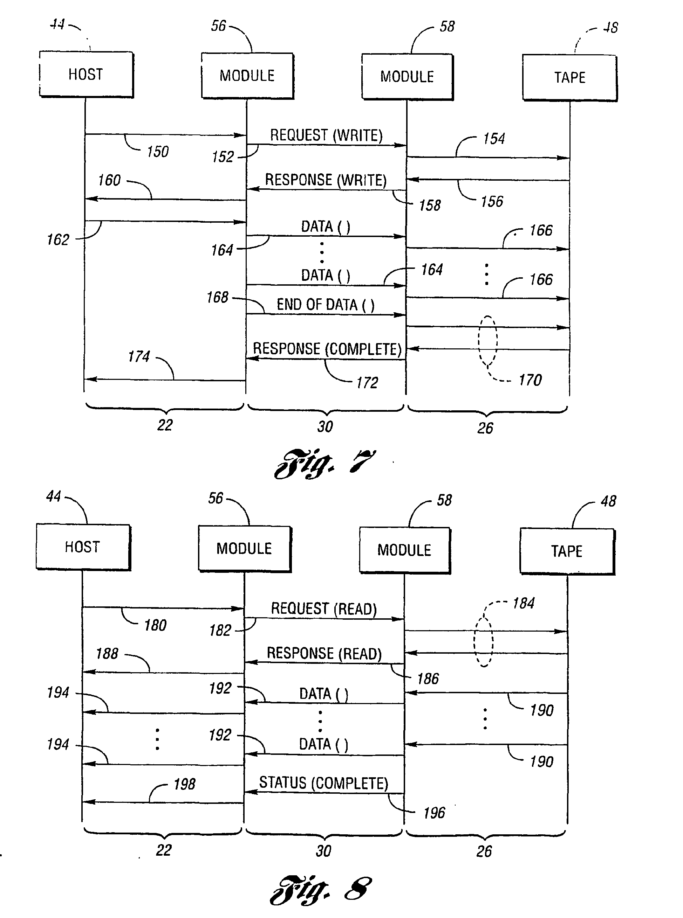

Referring now to Figure 7, a message flow diagram illustrating canonical streaming write according to an embodiment of the present invention is shown. Host 44 initiates an exchange of messages with logical device module 56 using first protocol 22, represented by logical write request 150. Logical device module 56 forwards canonical write request 152 to physical device module 58. Physical device module 58 exchanges messages with tape drive 48 using second protocol 26, shown as physical write request 154 and physical write response 156, to prepare tape drive 48 for streaming data. Physical device module 58 forwards canonical write response 158 to logical device module 56. Logical device module 56 acknowledges write set-up to host 44 through logical write response 160 using first protocol 22. Host 44 proceeds to transmit one or more logical write data messages 162 to logical device module 56. Depending upon host 44 and first protocol 22, logical module 56 may individually acknowledge each logical write data message 162, may acknowledge after the last logical write data message 162, or may provide no acknowledgment. As each logical write data message 162 is received by logical device module 56, logical device module 56 converts data from first protocol 22 into canonical protocol 30 and transmits the data in canonical write data message 164 to physical device module 158. Physical device module 158 converts the data from canonical protocol 30 to second protocol 26 and forwards the data to tape 48 in physical write data messages 166. Each module 56,58 may access buffers for temporary storage of data to compensate for differences in the rate at which data is received and transmitted.

Once all canonical write data messages 164 have been sent by logical device module 56, logical device module 56 sends canonical end-of-data message 168. Canonical end-of-data message 168 includes the request sequence number from canonical write request 152 and the length of data sent. Canonical end-of-data message 168 may also include error correction and detection coding, generic status, generic sense information, device-specific status, device-specific sense information, and flags indicating which fields are valid. Upon receiving canonical end-of-data message, physical device module 58 exchanges messages with tape drive 48 shown by physical data end procedure 170. Once physical device module 58 receives acknowledgment from tape drive 48 that the write operation has completed successfully, physical device module 58 sends canonical write complete response 172 to logical device module 56. Logical device module 56 exchanges one or more messages using first protocol 22 with host 44, indicated by logical write complete response 174.

Referring now to Figure 8, a message flow diagram illustrating canonical streaming read according to an embodiment of the present invention is shown. Host 44 exchanges one or more messages in first protocol 22, represented by logical read request 180, with logical device module 56. Logical device module 56 generates and forwards canonical read request 182 to physical device module 58. Physical device module 58 exchanges messages with tape drive 48 using second protocol 26 to implement physical read request procedure 184. Physical device module 58 then generates canonical read response 186 to logical device module 56. Depending on host 44 and protocol 22, logical device module 56 may forward logical read response 188 to host 44 through first protocol 22. Tape drive 48 sends physical read data 190 to physical device module 58 with second protocol 26. Physical device module 58 converts physical read data 190 in second protocol 26 to canonical data messages 192 in canonical protocol 30. Logical device module 56 receives canonical data messages 192, converts data messages 192 into first protocol 22, and forwards the converted data to host 44 in logical data messages 194. Once all data 192 has been sent from physical device module 58, physical device module 58 sends canonical read complete status message 196 to logical device module 56. After receiving canonical read complete status 196, logical device module 56 sends logical status message 198 to host 44 using first protocol 22.

Canonical status messages, such as canonical data transmission complete message 196, are used to send status and other information from physical device module 58 to logical device module 56 when that information either was not or could not be contained in a canonical response message. A canonical status message is required when data is being sent in streaming mode because the status is not known until after the data transfer has been completed. Canonical status messages include a request sequence number and may include generic status, generic sense information, device-specific status, device-specific sense information, error correction and detection code, length of data, and flags indicating which fields are valid.

The number and type of messages between computer elements 20,24 and corresponding translation modules 28,32 depend heavily on the type of computer element 20,24 and communication protocol 22,26. Examples of commands that may be used between host computer 44 and tape drive 48 together with corresponding canonical commands are provided in Table 1.

**TABLE 1**

| | | |
|---|---|---|
| **CANONICAL COMMAND** | **ESCON COMMAND** | **SCSI COMMAND** |
| Read | Read | Read |
| Read Backward | Read Backward | Read Reverse |
| Write (Flush buffer, data compression, chain) | Write | Write |
| | | |
| WTM (Count) | Write Tape Mark | Write Filemarks (number) |
| FSF (Count) | Forward Space File | Space (positive filemarks) |
| BSF (Count) | Backward Space File | Space (negative filemarks) |
| FSR (Count) | Forward Space Block | Space (positive records) |
| BSR (Count) | Backward Space Block | Space (negative records) |
| REW (Count) | Rewind | Rewind |
| RUN | Rewind/Unload | Load/Unload (unload) |
| LOAD | Load Display (Auto Load Bit) | Load/Unload (load) |
| NoOp | No-Op | Test Unit Ready |
| Read Buffer | Read Buffer | Recover Buffered Data |
| Erase Gap | Erase Gap | Erase (long=0) |
| Erase | Data Security Erase | Erase |
| Read Position | Read Block ID | Read Position |
| Locate | Locate Block | Locate |
| Synchronize | Synchronize | Write Filemarks (count=0) |
| Load Display | Load Display | Load Display |
| Reserve | Assign | Reserve Unit |
| Release | Unassign | Release Unit |
| (Local) | Mode Set | |
| (Local) | | Inquiry |
| (Local) | | Log Select |
| (Local) | | Log Sense |
| (Local) | | Mode Select |
| (Local) | | Mode Sense |
| (Local) | | Prevent/Allow Media Removal |
| (Local) | | Read Block Limits |
| (Local) | Sense | Sense Request |
| (Local) | Sense ID | |
| (Local) | Read Device Characteristics | |
| (Local) | Set Path Group ID | |
| (Local) | Sense Path Group ID | |
| (Local) | Channel Path No-Op | |
| (Local) | Suspend Multipath Reconnection | |
| (Local) | Set Interface ID | |
| (Local) | Read Buffered Log | |
| (Local) | Control Access | |
| (Local) | Read Configuration Data | |
| (Local/not supported) | | Receive Diagnostics Results |
| (Local/not supported) | | Send Diagnostic |
| (Local/not supported) | Read Subsystem Data | |
| (Local/not supported) | Read Message ID | |
| (Local/not supported) | Perform Subsystem Function | |

In an embodiment of the present invention, ESCON commands in Table 1 represent messages transmitted using first protocol 22. SCSI commands in Table 1 represent messages transmitted in second protocol 26. Translation module 28 then converts between ESCON commands and canonical commands and translation module 32 translates between SCSI commands and canonical commands. Certain ESCON and SCSI commands, indicated by "Local" as a canonical command, do not have a corresponding canonical command. For these commands, translation module 28,32 receives a message from computer element 20,24 but generates no corresponding message in canonical protocol 30. Likewise, translation module 28,32 may generate a command for computer element 20,24 without having received a corresponding message in canonical protocol 30.

While examples illustrating the best mode have been described with regard to data access between a host computer and a tape drive, many altematives are possible. A host computer may interface through the present invention to any type of peripheral device such as, for example, tape drives, disk drives, tape libraries, disk libraries, optical storage devices, solid state memory storage devices, communication interfaces, and the like.

## Claims

1. A system for interfacing a first computer element (20) with a second computer element (24), one of the first computer element and the second computer element being a data storage device arranged to respond to data storage commands from host computer systems, the first computer element operating with a first data storage protocol (22) and the second computer element operating with a second data storage protocol (26), the system comprising;
a storage area network (42) interconnecting the first computer element and the second computer element; and **characterised by**:
a first module (28) disposed within the storage area network, the first module in communication with the first computer element, the first module translating between messages in the first protocol and messages in a canonical protocol (30) the canonical protocol including at least one data storage access command; and
a second module (32) disposed within the storage area network, the second module in communication with the second computer element and the first module, the second module translating between messages in the second protocol and messages in the canonical protocol.

2. A system for interfacing a first computer element with a second computer element as in daim 1 wherein the first module executes on a first interface and the second module executes on a second interface.

3. A system for interfacing a first computer element with a second computer element as in claim 1 wherein the second computer element is a peripheral device, the second module functioning as a server to the first module client.

4. A system for interfacing a first computer element with a second computer element as in daim 1 wherein at least one of the first module and the second module is operative to exchange messages in the canonical protocol with a plurality of modules disposed within the storage area network.

5. A system for interfacing a first computer element with a second computer element as in claim 1 wherein the first computer element is a host computer (44) and the second computer element is a data storage device (46; 48).

6. A system for interfacing a first computer element with a second computer element as in claim 1 wherein the second module is operative to generate messages in the second protocol for the second computer element independent of any received message in the canonical protocol.

7. A method for interfacing a first computer element (20) and a second computer element (24) exchanging messages, the first computer element sending and receiving messages using a first data storage protocol (22), the second computer element sending and receiving messages using a second data storage protocol (26), one of the first computer element and the second computer element is a data storage device responding to data storage commands from host computer systems, the method comprising:
translating messages received from the first computer element from the first protocol to a canonical protocol (30), and **characterized in**, the canonical protocol including at least one data storage access command;
translating messages sent to the first computer element from the canonical protocol to the first protocol;
translating messages received from the second computer element from the second protocol to the canonical protocol;
translating messages sent to the second computer element from the canonical protocol to the second protocol;
receiving the messages sent from the first computer element and the second computer element in a storage area network (42) before translation into the canonical protocol; and
sending the messages received by the first computer element and the second computer element from the storage area network after translation out of the canonical protocol.

8. A method for interfacing a first computer element and a second computer element exchanging messages as in claim 7 wherein translating messages sent to or received from the first computer element comprises translating in a first interface and wherein translating messages sent to or received from the second computer element comprises translating in a second interface, the first interface and the second interface separate from the first computer element and the second computer element.

9. A method for interfacing a first computer element and a second computer element exchanging messages as in claim 7 wherein at least one of the first computer element and the second computer element exchanges messages with a plurality of computer elements, each of the plurality of computer elements sending messages translated to the canonical protocol and receiving messages translated from the canonical protocol.

10. A method for interfacing a first computer element and a second computer element exchanging messages as in claim 7 wherein translating a message results in generating, for at least one type of message received, a plurality of messages sent.

11. A method for interfacing a first computer element and a second computer element exchanging messages as in claim 7 wherein translating a message results in generating, for at least one type of message received, a retum message to the sender of the message received.

12. A storage area network interconnecting at least one host computer (44) accessing data using a logical device protocol with at least one storage device (46; 48) allowing access to data through a physical device protocol, each of the logical device protocol and the physical device protocol being a data storage protocol, the storage area network (42) **characterised by**:
at least one logical device module (56) in communication with each host computer, each logical device module translating between logical device protocol messages and canonical protocol messages, the canonical protocol messages including at least one data storage access command;
at least one physical device module (58) in communication with each storage device, each physical device module translating between physical device protocol messages and canonical protocol messages.

13. A storage area network as in claim 12 wherein at least one logical device module executes on a first interface disposed within the storage area network and at least one physical device module executes on a second interface disposed within the storage area network.

14. A storage area network as in claim 12 wherein at least one physical device module functions as a server for at least one logical device module client.

15. A storage area network as in claim 12 wherein at least one of the physical and logical device modules is operative to generate messages independent of any messages received in the canonical protocol.

16. A storage area network as in claim 12 wherein at least one of the physical and logical device modules is operative to generate a plurality of messages in response to at least one message type received in the canonical protocol.

17. A storage area network as in claim 12 wherein at least one of the physical and logical device modules is operative to generate a response message in the canonical protocol in response to at least one message type received in the canonical protocol.

18. A storage area network as in claim 12 wherein at least one of the physical and logical device protocols comprises SCSI.

19. A storage area network as in claim 12 wherein at least one of the physical and logical device protocols comprises ESCON.

## Patentansprüche

1. System zur Verknüpfung eines ersten Computerelements (20) mit einem zweiten Computerelement (24), wobei entweder das erste Computerelement oder das zweite Computerelement eine Datenspeichervorrichtung ist, die so angeordnet ist, dass sie auf Datenspeicherbefehle von Zentralcomputersystemen anspricht, wobei das erste Computerelement mit einem ersten Datenspeicherprotokoll (22) arbeitet und das zweite Computerelement mit einem zweiten Datenspeicherprotokoll (26) arbeitet und das System Folgendes umfasst:
ein Speicherbereichsnetz (42), das das erste Computerelement und das zweite Computerelement miteinander verbindet; und **gekennzeichnet durch**:
ein erstes Modul (28), das innerhalb des Speicherbereichsnetzes angeordnet ist, wobei das erste Modul mit dem ersten Computerelement in Kommunikation steht, das erste Modul Mitteilungen in dem ersten Protokoll in Mitteilungen in einem kanonischen Protokoll (30) übersetzt und umgekehrt und das kanonische Protokoll mindestens einen Datenspeicherzugriffsbefehl umfasst; und
ein zweites Modul (32), das innerhalb des Speicherbereichsnetzes angeordnet ist, wobei das zweite Modul mit dem zweiten Computerelement und dem ersten Modul in Kommunikation steht und das zweite Modul Mitteilungen in dem zweiten Protokoll in Mitteilungen in dem kanonischen Protokoll übersetzt und umgekehrt.

2. System zur Verknüpfung eines ersten Computerelements mit einem zweiten Computerelement nach Anspruch 1, wobei das erste Modul an einer ersten Schnittstelle ausgeführt wird und das zweite Modul an einer zweiten Schnittstelle ausgeführt wird.

3. System zur Verknüpfung eines ersten Computerelements mit einem zweiten Computerelement nach Anspruch 1, wobei das zweite Computerelement ein Peripheriegerät ist und das zweite Modul dem Clienten ersten Moduls als Server dient.

4. System zur Verknüpfung eines ersten Computerelements mit einem zweiten Computerelement nach Anspruch 1, wobei mindestens das erste Modul oder das zweite Modul Mitteilungen in dem kanonischen Protokoll mit einer Vielzahl von Modulen austauschen kann, die in dem Speicherbereichsnetz angeordnet sind.

5. System zur Verknüpfung eines ersten Computerelements mit einem zweiten Computerelement nach Anspruch 1, wobei das erste Computerelement ein Zentralcomputer (44) ist und das zweite Computerelement eine Datenspeichervorrichtung (46; 48) ist.

6. System zur Verknüpfung eines ersten Computerelements mit einem zweiten Computerelement nach Anspruch 1, wobei das zweite Modul unabhängig von empfangenen Mitteilungen in dem kanonischen Protokoll Mitteilungen in dem zweiten Protokoll für das zweite Computerelement erzeugen kann.

7. Verfahren zur Verknüpfung eines ersten Computerelements (20) und eines zweiten Computerelements (24), die Mitteilungen austauschen, wobei das erste Computerelement Mitteilungen unter Verwendung eines ersten Datenspeicherprotokolls (22) sendet und empfängt, das zweite Computerelement Mitteilungen unter Verwendung eines zweiten Datenspeicherprotokolls (26) sendet und empfängt, entweder das erste Computerelement oder das zweite Computerelement eine Datenspeichervorrichtung ist, die auf Datenspeicherbefehle von Zentralcomputersystemen anspricht, wobei das Verfahren Folgendes umfasst:
Übersetzen von Mitteilungen, die von dem ersten Computerelement empfangen werden, von dem ersten Protokoll in ein kanonisches Protokoll (30) und **dadurch gekennzeichnet, dass** das kanonische Protokoll mindestens einen Datenspeicherzugriffsbefehl umfasst;
Übersetzen von Mitteilungen, die zu dem ersten Computerelement gesendet wurden, von dem kanonischen Protokoll in das erste Protokoll;
Übersetzen von Mitteilungen, die von dem zweiten Computerelement empfangen wurden, von dem zweiten Protokoll in das kanonische Protokoll;
Übersetzen von Mitteilungen, die zu dem zweiten Computerelement gesendet wurden, von dem kanonischen Protokoll in das zweite Protokoll;
Empfangen der Mitteilungen, die von dem ersten Computerelement und dem zweiten Computerelement gesendet wurden, in einem Speicherbereichsnetz (42), bevor sie in das kanonische Protokoll übersetzt werden; und
Senden der Mitteilungen, die mit Hilfe des ersten Computerelements und des zweiten Computerelements empfangen wurden, von dem Speicherbereichsnetz, nachdem sie von dem kanonischen Protokoll übersetzt wurden.

8. Verfahren zur Verknüpfung eines ersten Computerelements und eines zweiten Computerelements, die Mitteilungen austauschen, nach Anspruch 7, wobei das Übersetzen von Mitteilungen, die zum ersten Computerelement gesendet wurden oder von diesem empfangen wurden, das Übersetzen in einer ersten Schnittstelle umfasst, und das Übersetzen von Mitteilungen, die zum zweiten Computerelement gesendet wurden oder von diesem empfangen wurden, das Übersetzen in einer zweiten Schnittstelle umfasst, wobei die erste Schnittstelle und die zweite Schnittstelle separat von dem ersten Computerelement und dem zweiten Computerelement angeordnet sind.

9. Verfahren zur Verknüpfung eines ersten Computerelements und eines zweiten Computerelements, die Mitteilungen austauschen, nach Anspruch 7, wobei mindestens das erste Computerelement oder das zweite Computerelement Mitteilungen mit einer Vielzahl von Computerelementen austauscht, jedes der Vielzahl von Computerelementen Mitteilungen sendet, die in das kanonische Protokoll übersetzt wurden, und Mitteilungen empfängt, die von dem kanonischen Protokoll übersetzt wurden.

10. Verfahren zur Verknüpfung eines ersten Computerelements und eines zweiten Computerelements, die Mitteilungen austauschen, nach Anspruch 7, wobei das Übersetzen einer Mitteilung für mindestens einen Typ einer empfangenen Mitteilung die Erzeugung einer Vielzahl von gesendeten Mitteilungen zur Folge hat.

11. Verfahren zur Verknüpfung eines ersten Computerelements und eines zweiten Computerelements, die Mitteilungen austauschen, nach Anspruch 7, wobei das Übersetzen einer Mitteilung für mindestens einen Typ einer empfangenen Mitteilung die Erzeugung einer Rückmitteilung zum Sender der empfangenen Mitteilung zur Folge hat.

12. Speicherbereichsnetz, das Folgendes miteinander verbindet: mindestens einen Zentralcomputer (44), der unter Verwendung eines Protokolls einer logischen Vorrichtung auf Daten zugreift, und mindestens eine Speichervorrichtung (46; 48), die den Zugriff auf Daten durch ein Protokoll einer physikalischen Vorrichtung ermöglicht, wobei das Protokoll einer logischen Vorrichtung und das Protokoll einer physikalischen Vorrichtung ein Datenspeicherprotokoll sind und das Speicherbereichsnetz (42) durch Folgendes **gekennzeichnet** ist:
mindestens ein Modul (56) einer logischen Vorrichtung, das mit jedem Zentralcomputer in Kommunikation steht, wobei jedes Modul einer logischen Vorrichtung Mitteilungen in einem Protokoll einer logischen Vorrichtung in Mitteilungen in einem kanonischen Protokoll übersetzt und umgekehrt und die Mitteilungen in einem kanonischen Protokoll mindestens einen Datenspeicherzugriffsbefehl umfassen;
mindestens ein Modul (58) einer physikalischen Vorrichtung, das mit jeder Speichervorrichtung in Kommunikation steht, wobei jedes Modul einer physikalischen Vorrichtung Mitteilungen in einem Protokoll einer physikalischen Vorrichtung in Mitteilungen in einem kanonischen Protokoll übersetzt und umgekehrt.

13. Speicherbereichsnetz nach Anspruch 12, wobei mindestens ein Modul einer logischen Vorrichtung an einer ersten Schnittstelle ausgeführt wird, die innerhalb des Speicherbereichsnetzes angeordnet ist, und mindestens ein Modul einer physikalischen Vorrichtung an einer zweiten Schnittstelle ausgeführt wird, die innerhalb des Speicherbereichsnetzes angeordnet ist.

14. Speicherbereichsnetz nach Anspruch 12, wobei mindestens ein Modul einer physikalischen Vorrichtung für mindestens einen Modulclienten einer logischen Vorrichtung als Server dient.

15. Speicherbereichsnetz nach Anspruch 12, wobei mindestens das Modul einer physikalischen Vorrichtung oder das Modul einer logischen Vorrichtung unabhängig von Mitteilungen, die in dem kanonischen Protokoll empfangen wurden, Mitteilungen erzeugen kann.

16. Speicherbereichsnetz nach Anspruch 12, wobei mindestens das Modul einer physikalischen Vorrichtung oder das Modul einer logischen Vorrichtung als Reaktion auf mindestens einen Mitteilungstyp, der in dem kanonischen Protokoll empfangen wurde, eine Vielzahl von Mitteilungen erzeugen kann.

17. Speicherbereichsnetz nach Anspruch 12, wobei mindestens das Modul einer physikalischen Vorrichtung oder das Modul einer logischen Vorrichtung als Reaktion auf mindestens einen Mitteilungstyp, der in dem kanonischen Protokoll empfangen wurde, eine Antwortmitteilung in dem kanonischen Protokoll erzeugen kann.

18. Speicherbereichsnetz nach Anspruch 12, wobei mindestens das Protokoll einer physikalischen Vorrichtung oder das Protokoll einer logischen Vorrichtung SCSI umfasst.

19. Speicherbereichsnetz nach Anspruch 12, wobei mindestens das Protokoll einer physikalischen Vorrichtung oder das Protokoll einer logischen Vorrichtung ESCON umfasst.

## Revendications

1. Un système d'interfaçage d'un premier élément informatique (20) avec un deuxième élément informatique (24), l'un du premier élément informatique ou du deuxième élément informatique étant un dispositif de stockage de données agencé de façon à répondre à des commandes de stockage de données provenant des systèmes informatiques hôtes, le premier élément informatique fonctionnant avec un premier protocole de stockage de données (22) et le deuxième élément informatique fonctionnant avec un deuxième protocole de stockage de données (26), le système comprenant :
un réseau de stockage (42) interconnectant le premier élément informatique et le deuxième élément informatique; et **caractérisé par** :
un premier module (28) installé sur le réseau de stockage, le premier module étant en communication avec le premier élément informatique, le premier module convertissant des messages dans le premier protocole en des messages dans un protocole canonique (30) et inversement, le protocole canonique comprenant au moins une commande d'accès au stockage de dormées : et
un deuxième module (32) installé sur le réseau de stockage, le deuxième module étant en communication avec le deuxième élément informatique et le premier module, le deuxième module convertissant des messages dans le deuxième protocole en des messages dans le protocole canonique et inversement.

2. Un système d'interfaçage d'un premier élément informatique avec un deuxième élément informatique selon la Revendication 1 où le premier module est exécuté sur une première interface et le deuxième module est exécuté sur une deuxième interface.

3. Un système d'interfaçage d'un premier élément informatique avec un deuxième élément informatique selon la Revendication 1 où le deuxième élément informatique est un dispositif périphérique, le deuxième module servant de serveur pour le premier module client.

4. Un système d'interfaçage d'un premier élément informatique avec un deuxième élément informatique selon la Revendication 1 où au moins un élément parmi le premier module et le deuxième module est en mesure d'échanger des messages dans le protocole canonique avec une pluralité de modules installés sur le réseau de stockage.

5. Un système d'interfaçage d'un premier élément informatique avec un deuxième élément informatique selon la Revendication 1 où le premier élément informatique est un ordinateur hôte (44) et le deuxième élément informatique est un dispositif de stockage de données (46, 48).

6. Un système d'interfaçage d'un premier élément informatique avec un deuxième élément informatique selon la Revendication 1 où le deuxième module est en mesure de générer des messages dans le deuxième protocole pour le deuxième élément informatique indépendamment de tout message reçu dans le protocole canonique.

7. Un procédé d'interfaçage d'un premier élément informatique (20) et d'un deuxième élément informatique (24) échangeant des messages, le premier élément informatique envoyant et recevant des messages en utilisant un premier protocole de stockage de données (22), le deuxième élément informatique envoyant et recevant des messages en utilisant un deuxième protocole de stockage de données (26), un des éléments parmi le premier élément informatique et le deuxième élément informatique étant un dispositif de stockage de données répondant à des commandes de stockage de données provenant de systèmes informatiques hôtes, le procédé comprenant les opérations suivantes :
la conversion des messages reçus du premier élément informatique d'un premier protocole vers un protocole canonique (30) et **caractérisée par le fait que** le protocole canonique contient au moins une commande d'accès au stockage de données ;
la conversion des messages envoyés vers le premier élément informatique du protocole canonique vers le premier protocole ;
la conversion des messages reçus du deuxième élément informatique du deuxième protocole vers le protocole canonique ;
la conversion des messages envoyés vers le deuxième élément informatique du protocole canonique vers le deuxième protocole ;
la réception des messages envoyés du premier élément informatique et du deuxième élément informatique dans un réseau de stockage (42) avant leur conversion dans le protocole canonique ; et
l'envoi des messages reçus par le premier élément informatique et le deuxième élément informatique du réseau de stockage après leur conversion à partir du protocole canonique.

8. Un procédé d'interfaçage d'un premier élément informatique et d'un deuxième élément informatique échangeant des messages selon la Revendication 7 où la conversion des messages envoyés vers ou reçus du premier élément informatique comprend la conversion dans une première interface et où la conversion des messages envoyés vers ou reçus du deuxième élément informatique comprend la conversion dans une deuxième interface, la première interface et la deuxième interface étant distinctes du premier élément informatique et du deuxième élément informatique.

9. Un procédé d'interfaçage d'un premier élément informatique et d'un deuxième élément informatique échangeant des messages selon la Revendication 7 où au moins un élément parmi le premier élément informatique et le deuxième élément informatique échange des messages avec une pluralité d'éléments informatiques, chacun des éléments informatiques de la pluralité d'éléments informatiques envoyant des messages convertis dans le protocole canonique et recevant des messages convertis à partir du protocole canonique.

10. Un procédé d'interfaçage d'un premier élément informatique et d'un deuxième élément informatique échangeant des messages selon la Revendication 7 où la conversion d'un message aboutit à la génération, pour au moins un type de message reçu, d'une pluralité de messages envoyés.

11. Un procédé d'interfaçage d'un premier élément informatique et d'un deuxième élément informatique échangeant des messages selon la Revendication 7 où la conversion d'un message aboutit à la génération, pour au moins un type de message reçu, d'un message en retour vers l'expéditeur du message reçu.

12. Un réseau de stockage interconnectant au moins un ordinateur hôte (44) accédant à des données en utilisant un protocole de dispositif logique avec au moins un dispositif de stockage (46, 48) autorisant l'accès aux données par l'intermédiaire d'un protocole de dispositif physique, chacun de ces protocoles, aussi bien le protocole de dispositif logique que le protocole de dispositif physique, étant un protocole de stockage de données, le réseau de stockage (42) étant **caractérisé par** :
au moins un module de dispositif logique (56) en communication avec chaque ordinateur hôte, chaque module de dispositif logique effectuant des conversions entre des messages à protocole de dispositif logique et des messages à protocole canonique, les messages à protocole canonique incluant au moins une commande d'accès au stockage de données ;
au moins un module de dispositif physique (58) en communication avec chaque dispositif de stockage, chaque module de dispositif physique effectuant des conversions entre des messages à protocole de dispositif physique et des messages à protocole canonique.

13. Un réseau de stockage selon la Revendication 12 où au moins un module de dispositif logique est exécuté sur une première interface installée sur le réseau de stockage et au moins un module de dispositif physique est exécuté sur une deuxième interface installée sur le réseau de stockage.

14. Un réseau de stockage selon la Revendication 12 où au moins un module de dispositif physique sert de serveur à au moins un module de dispositif logique client.

15. Un réseau de stockage selon la Revendication 12 où au moins un module parmi les modules de dispositif logique et de dispositif physique est en mesure de générer des messages indépendamment de tout message reçu dans le protocole canonique.

16. Un réseau de stockage selon la Revendication 12 où au moins un module parmi les modules de dispositif logique et de dispositif physique est en mesure de générer une pluralité de messages en réponse à au moins un type de message reçu dans le protocole canonique.

17. Un réseau de stockage selon la Revendication 12 où au moins un module parmi les modules de dispositif logique et de dispositif physique est en mesure de générer un message en réponse dans le protocole canonique en réponse à au moins un type de message reçu dans le protocole canonique.

18. Un réseau de stockage selon la Revendication 12 où au moins un protocole des protocoles de dispositifs physiques et logiques inclut le protocole SCSI.

19. Un réseau de stockage selon la Revendication 12 où au moins un protocole des protocoles de dispositifs physiques et logiques inclut le protocole ESCON.
